Europäisches Patentamt

European Patent Office

Office européen des brevets

(11) Numéro de publication: **0 231 670**
**B1**

(12) **FASCICULE DE BREVET EUROPEEN**

<table>
<tr><td>(45) Date de publication du fascicule du brevet:<br>31.10.90</td><td>(51) Int. Cl.⁵: <b>B29C 45/14</b></td></tr>
</table>

(21) Numéro de dépôt: **86401884.1**

(22) Date de dépôt: **27.08.86**

(54) Procédé de fabrication d'objets par injection de matière synthétique sur une pellicule découpée à partir d'une bande et machine pour la mise en oeuvre du procédé.

(30) Priorité: **13.01.86 FR 8600367**

(43) Date de publication de la demande:
**12.08.87 Bulletin 87/33**

(45) Mention de la délivrance du brevet:
**31.10.90 Bulletin 90/44**

(84) Etats contractants désignés:
**AT BE CH DE GB IT LI LU NL SE**

(56) Documents cités:
**BE-A- 676 418**
**FR-A- 1 532 162**
**GB-A- 974 141**
**US-A- 2 811 744**
**US-A- 3 324 508**

**PATENT ABSTRACTS OF JAPAN,**
**vol. 6, no. 167 (M-153)[1045], 31 août 1982; &**
**JP-A-57 82 030 (TAKARA KASEI KOGYO**
**K.K.) 22-05-1982**
**PATENT ABSTRACTS OF JAPAN,**
**vol. 8, no. 73 (M-287)[1510], 5 avril 1984; &**
**JP-A-58 220 716 (NITSUSEI JIYUSHI KOGYO**
**K.K.) 22-12-1983**

(73) Titulaire: **TOLKKI OY, Kalkkimaentie 2,**
**03100 Nummela(FI)**

(72) Inventeur: **Dromigny, Pierre, 54, avenue de Versailles,**
**F-75016 Paris(FR)**

(74) Mandataire: **Bonnetat, Christian, CABINET**
**BONNETAT 23, Rue de Léningrad, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé et une machine selon les premières parties des revendications 1 et 2. Un tel procédé et une telle machine sont connus du document FR-A-15 352 162.

De manière habituelle, un tel procédé implique l'utilisation d'une machine d'injection compreant un moule comportant un poinçon et une matrice, et au moins une buse d'injection de matière synthétique, ledit procédé comprenant les étapes suivantes :
- alimenter le moule en pellicules, et
- injecter de la matière synthétique dans l'espace, entre le poinçon et la matrice, subsistant lorsque le moule est fermé.

Dans les procédés connus, l'alimentation du moule en pellicules est réalisée, à partir d'un bac contenant les pellicules prédécoupées, à l'aide de mécanismes relativement complexes comportant des moyens pour saisir et amener, une à une, les pellicules dans le moule. Or, cette façon de faire présente un certain nombre d'inconvénients. En particulier, comme pour saisir les pellicules on utilise en général un dispositif d'aspiration, il se produit, dans un pourcentage non négligeable de cas, que l'on entraîne, en même temps, deux ou plusieurs pellicules qu'il n'est plus possible par la suite de séparer. L'objet peut ainsi être revêtu de plusieurs couches de pellicules ce qui n'est bien sûr pas économiquement avantageux. En outre, selon le type de machine utilisé et/ou d'objet à réaliser, le trajet que l'on doit faire effecteur à la pellicule entre le bac de stockage et le moule peut être relativement compliqué, ce qui implique une complexité plus grande du dispositif d'amenée des pellicules, ainsi qu'un risque accru de perte de la pellicule au cours de son transport.

On remarquera que le document FR-A 1 532 162 permet de remédier aux inconvénients de l'alimentation du moule en pellicules individuelles prédécoupées. En effet, dans ce document, on décrit un procédé de fabrication, par injection de matière synthétique, d'objets comportant une pellicule faisant partie intégrante de ceux-ci et constituant un revêtement au moins partiel desdits objets, au moyen d'une machine d'injection comprenant un moule comportant un poinçon et une matrice, et au moins une buse d'injection de matière synthétique, ledit procédé comprenant les étapes suivantes:

– faire avancer, pas à pas, une bande du matériau des pellicules vers le moule,
– séparer de ladite bande, après avance de celle-ci d'un pas correspondant à une dimension de la pellicule, une pellicule, se trouvant entre le poinçon et la matrice au moment où le moule est fermé,
– injecter de la matière synthétique dans l'espace entre le poinçon et la matrice subsistant lorsque le moule est fermé.

Toutefois, dans ce procédé, les pellicules sont découpées et séparées de la bande par les bords tranchants du poinçon, ce qui limite le format des pellicules à une forme simple et unique.

La présente invention a pour objet de remédier à cet inconvénient. Elle concerne un procédé du type décrit dans le brevet précité, permettant d'obtenir des pellicules de tous formats ou formes désirés.

A cette fin, selon l'invention, le procédé du type décrit ci-dessus est caractérisé en ce que la pellicule est découpée au format choisi dans la partie de la bande précédant immédiatement le moule, sans séparer la pellicule de la bande.

On remarquera que le document GB-A 974 141 décrit un dispositif pour la découpe d'une pellicule dans une partie de avant le transfert au moule, un dispositif de transfert particulier étant prévu à cet effet.

La présente invention concerne également une machine de fabrication, par injection de matière synthétique, d'objects comportant une pellicule faisant partie intégrante de ceux-ci et constituant un revêtement au moins partiel desdits objets, du type comprenant un moule comportant un poinçon et une matrice, et au moins une buse d'injection de matière synthétique, et des moyens d'alimentation du moule en pellicules comportant des moyens d'avance, pas à pas, d'une bande du matériau des pellicules vers le moule, et des moyens, associés au moule, pour séparer de ladite bande, après avance de celle-ci d'un pas correspondant à une dimension de la pellicule, une pellicule, se trouvant entre le poinçon et la matrice au moment où le moule est fermé, caractérisée par des moyens de découpe de la pellicule au format choisi, qui ne séparent pas la pellicule de la bande, disposés immédiatement avant le moule.

Dans un premier mode de réalisation de l'invention, lesdits moyens de découpe comprennent deux couteaux s'étendant dans la direction longitudinale de la bande et dont la section transversale est adaptée au format choisi de la pellicule.

Lesdits moyens de séparation de la pellicule peuvent comprendre au moins un couteau agencé transversalement à la direction d'avance de la bande en aval desdits moyens de découpe.

Dans une application particulière de l'invention, la buse d'injection de matière synthétique est portée par le poinçon et l'on prévoit des moyens de maintien de la pellicule contre le poinçon pendant la fermeture du moule, comprenant au moins un coulisseau logé dans la cavité formée par la matrice, saillant, en position ouverte du moule, et susceptible de coopérer avec le poinçon pour maintenir la pellicule contre ce dernier pendant la fermeture du moule, le coulisseau étant déplaçable, sous l'action du poinçon dans la direction d'avance de celui-ci, à l'encontre d'une force de rappel.

Selon d'autres caractéristiques de l'invention, le coulisseau comprend une tige dont une extrémité est reliée à un moyen générateur de la force de rappel, tel qu'un piston pouvant coulisser dans un cylindre prévu au-delà de la cavité de la matrice, dans la direction d'avance du poinçon, et dont l'autre extrémité porte une tête aplatie susceptible de venir en appui contre la face de la pellicule en regard de la matrice. L'axe du coulisseau peut être au moins sensiblement parallèle à la direction d'avance du poinçon, et notamment confondu avec l'axe central de la matrice.

Les figures du dessin annexé feront bien comprendre comment l'invention peut être réalisée. Sur ces figures, des références identiques désignent des éléments semblables.

La figure 1 est une vue en coupe d'un premier mode de réalisation d'une machine de fabrication d'objets, par injection de matière synthétique, selon l'invention, en position ouverte du moule.

Les figures 2a à 2e illustrent les différentes phases du procédé de fabrication d'un objet à l'aide de la machine de la figure 1.

La figure 3 représente un détail de la bande du matériau des pellicules.

La figure 4 est une vue coupe d'un second mode de réalisation d'une machine de fabrication d'objets, par injection de matière synthétique, selon l'invention, en position ouverte du moule.

La figure 5 représente la bande du matériau des pellicules, ainsi que les moyens de découpe de celle-ci associés à la machine de la figure 4.

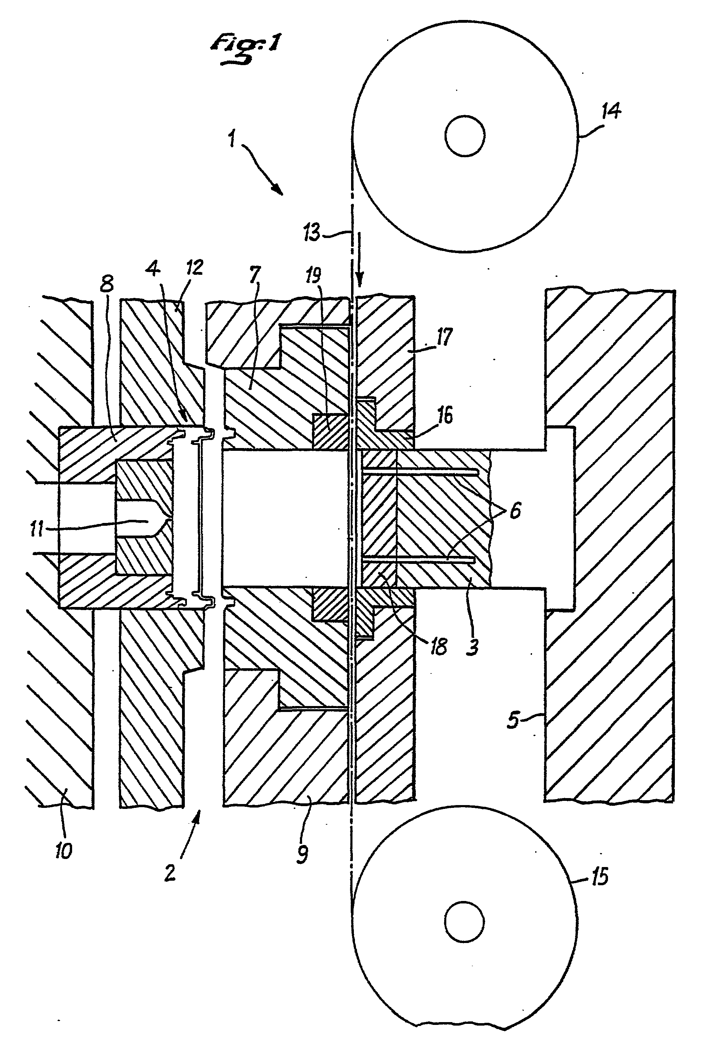

En se référant à la figure 1, un premier mode de réalisation d'une machine 1 de fabrication d'objets, par injection de matière synthétique, adaptée à la réalisation de couvercles de récipients, comprend un moule 2 comportant un poinçon 3 et une matrice 4.

Le poinçon 3 est monté sur un support de poinçon 5 et est muni de canaux d'aspiration d'air 6 dont la fonction sera expliquée ci-après. La matrice 4 se divise en une empreinte extérieure 7 et une empreinte intérieure 8. L'empreinte extérieure 7 est montée sur un support d'empreinte extérieure 9, et l'empreinte intérieure 8 sur un support d'empreinte intérieure 10. La matrice 4 est en outre munie d'une buse d'injection de matière synthétique 11, et on prévoit, entre l'empreinte extérieure 7 et l'empreinte intérieure 8, un éjecteur 12 permettant d'évacuer le produit fini du moule.

Une bande 13 du matériau des pellicules, déroulée d'une bobine 14 et enroulée sur une bobine 15, ou inversement, (les bobines étant entraînées par des moyens classiques non représentés ) passe entre le poinçon 3 et la matrice 4. Plus précisément, le poinçon 3 est guidé, lors de son déplacement pendant l;'ouverture ou la fermeture du moule, par une glissière 16, montée sur un support de glissière 17, et dans l'évidement central de l'empreinte extérieure 7.

Comme on peut le voir sur la figure 1, la bande 13 est en fait guidée entre, d'une part, l'empreinte extérieure 7 et son support 9 et, d'autre part, la glissière 16 et son support 17.

Dans ce premier mode de réalisation de l'invention, les moyens de découpe de la pellicule, dans la bande 13, au format choisi sont constitués par le tranchant 18 du poinçon 3 qui est susceptible de coopérer avec un contre-couteau 19 porté par l'empreinte extérieure 7 à l'extrémité de celle-ci la plus proche du poinçon 3 en position ouverte du moule.

Pour être complet, on doit noter que le moule est muni de canaux de refroidissement appropriés (non représentés).

En se référant maintenant plus particulièrement aux figures 2a à 2e, on décrira ci-après le fonctionnement de ce premier mode de réalisation de la machine selon l'invention.

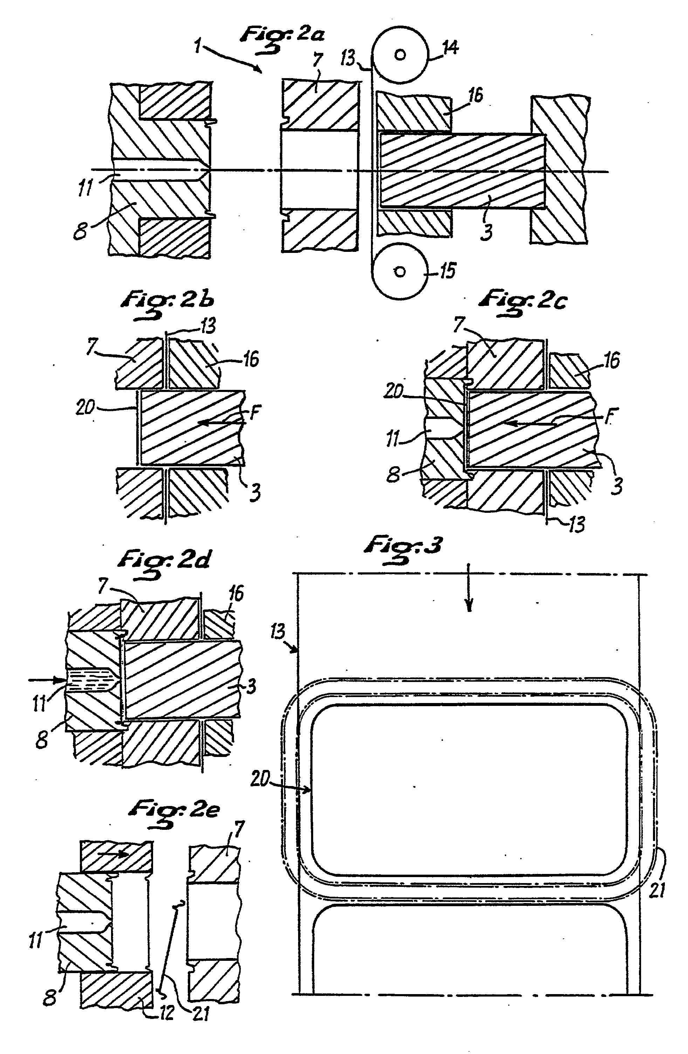

La figure 2a illustre, de façon plus schématique que la figure 1, la position ouverte du moule. Dans un premier temps, le mouvement d'avance du poinçon 3 dans la direction de la flèche F (figure 2 b) permet la découpe d'une pellicule 20 au format choisi, le poinçon 3 jouant le rôle de couteau coopérant avec le contre-couteau 19 (figure 1). Dans le cas illustré où la pellicule est une étiquette qui doit faire partie intégrante du couvercle d'un récipient, celle-ci est de forme sensiblement rectangulaire à coins arrondis (figure 3). On notera que, dans cette même figure 3, les contours du couvercle 21 à obtenir sont représentés en traits mixtes.

La figure 2c illustre la position fermée du moule. Pendant la fermeture du moule, la pellicule 20 est maintenue contre le poinçon 3 par aspiration d'air par les canaux 6. Une fois le moule fermé, l'injection de matière synthétique par la buse d'injection 11 peut commencer (figure 2d).

Une fois le moulage terminé, le moule s'ouvre et le produit fini 21, comportant une étiquette faisant partie intégrante de celui-ci, peut être évacué du moule grâce à l'éjecteur 12.

Lorsque le moule est ouvert, la bande 13 du matériau des pellicules avance d'un pas correspondant à une dimension (dans ce cas la largeur) de la pellicule à découper de sorte qu'un tronçon de bande intact se retrouve contre le poinçon 3. Comme on peut le voir sur la la figure 3, l'entraînement de la bande 13, à partir de la bobine 15 par exemple, est possible du fait qu'il demeure dans la bande des marges non découpées.

Le cycle décrit précédemment peut alors recommencer.

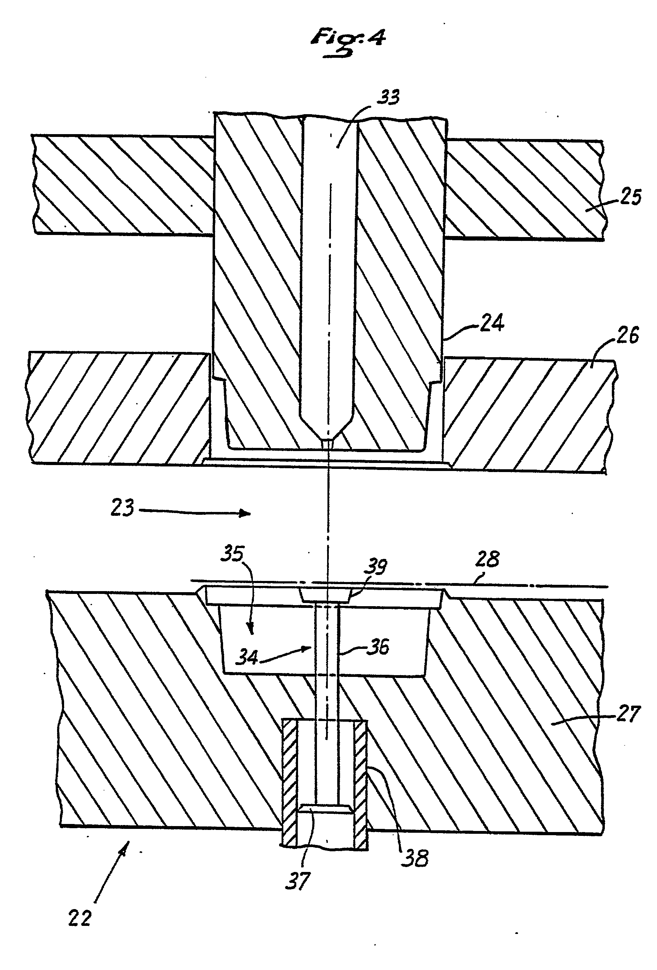

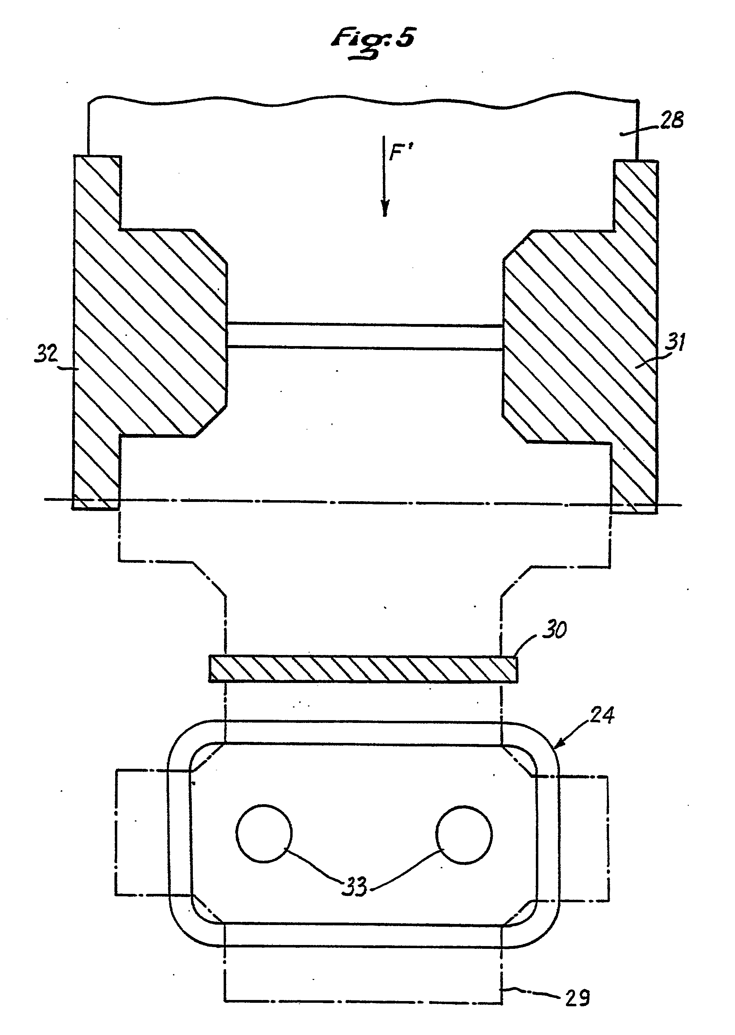

En se référant maintenant aux figures 4 et 5, on décrira ci-après un second mode de réalisation de la machine selon l'invention, adaptée dans ce cas à la fabrication de récipients du type barquette.

La machine 22 comprend un moule 23 comportant un poinçon 24 monté sur un support de poinçon 25 et guidé dans une glissière 26, et une matrice 27.

Dans ce cas, la bande 28 du matériau des pellicules est amenée, à l'aide de tout moyen approprié tel que des galets presseurs, dns l'espace, entre la glissière 26 et la matrice 27, existant lorsque le moule est ouvert.

Comme on peut le voir sur la figure 5, les moyens de découpe de la pellicule 29 présentant, dans cet exemple, une forme générale de croix, sont disposés immédiatement avant le moule 23. La forme de croix de la pellicule permet de revêtir, au moins partiellement, les quatre faces latérales et le fond de la barquette.

Les moyens de découpe comprennent un couteau 30 agencé transversalement à la direction d'avance de la bande 28 (flèche F′) et, en amont du couteau transversal 30, deux couteaux 31, 32 s'étendant dans la direction longitudinale de la bande 28, et dont la section transversale est adaptée à la forme souhaitée de la pellicule 29.

Dans cet exemple de réalisation, la ou les buses d'injection 33 de matière synthétique sont prévues dans le poinçon 24. On prévoit en outre des moyens pour maintenir la pellicule 29, une fois découpée, contre le poinçon 24 pendant la fermeture du moule.

Ces moyens comprennent un coulisseau 34 logé dans la cavité 35 de la matrice 27 et comportant une tige 36 dont une extrémité est reliée à un piston 37 pouvant coulisser dans un cylindre 38 prévu au-delà de la cavité 35 de la matrice 27, et dont l'autre extrémité porte une tête aplatie 39 susceptible de venir en appui contre la face de la pellicule en regard de la matrice. On notera que l'axe du coulisseau 34 est au moins sensiblement parallèle à la direction d'avance du poinçon 24, et notamment confondu avec l'axe central de la matrice.

Ainsi, le coulisseau 34, saillant en position ouverte du moule 23, est susceptible de coopérer avec le poinçon 24 pour maintenir la pellucule 29 contre ce dernier pendant la fermeture du moule, le coulisseau étant déplaçable, sous l'action du poinçon, dans la direction d'avance de celui-ci, à l'encontre de la force de rappel créée par le déplacement du piston 37 dans le cylindre 38.

Dans ce cas, la découpe de la pellucule 29 au format choisi a lieu, dans l'espace, dans la partie de la bande 28 précédant immédiatement le moule et, dans le temps, immédiatement avant et/ou pendant la fermeture du moule. Dans un premier temps, les couteaux longitudinaux 31 et 32 préforment la pellicule qui est ensuite détachée de la bande à l'aide du couteau transversal 30, alors qu'elle se trouve entre le poinçon 24 et la matrice 27. Pendant la fermeture du moule, la pellicule 29 est maintenue contre le poinçon 24 comme décrit précédemment.

Une fois le moule 23 fermé, on injecte de la matière synthétique par la ou les buses 33, et la pellicule 29 se trouve ainsi faire partie intégrante des faces latérales externes et de la face de fond externe du récipient fabriqué.

Après ouverture du moule, la bande 28 avance d'un pas correspondant à la dimension de la pellicule dans la direction longitudinale de la bande, et le cycle décrit ci-dessus peut recommencer.

On pourrait également concevoir, dans ce second exemple de réalisation, d'adapter le poinçon pour qu'il joue le rôle de couteau coopérant alors avec un contre-couteau prévu au niveau de la glissière 26. On pourrait, en particulier, envisager une telle adaptation dans le cas où la pellicule se serait destinée qu'à revêtir le fond de la barquette.

## Revendications

1. Procédé de fabrication, par injection de matière synthétique, d'objets comportant une pellicule (29) faisant partie intégrante de ceux-ci et constituant un revêtement au moins partiel desdits objets, au moyen d'une machine d'injection comprenant un moule comportant un poinçon (3) et une matrice (4), et au moins une buse d'injection de matière synthétique (11), ledit procédé comprenant les étapes suivantes:
   - faire avancer, pas à pas, une bande (13) du matériau des pellicules vers le moule (3, 4),
   - séparer de ladite bande (13), après avance de celle-ci d'un pas correspondant à une dimension de la pellicule, une pellicule (29), se trouvant entre le poinçon (3) et la matrice (4) au moment où le moule est fermé,
   - injecter de la matière synthétique dans l'espace entre le poinçon (3) et la matrice (4) subsistant lorsque le moule est fermé, caractérisé en ce que la pellicule (29) est découpée au format choisi dans la partie de la bande (28) précédant immédiatement le moule (23), sans séparer la pellicule de la bande.

2. Machine de fabrication, par injection de matière synthétique, d'objets comportant une pellicule (29) faisant partie intégrante de ceux-ci et constituant un revêtement au moins partiel desdits objets, du type comprenant un moule comportant un poinçon (3) et une matrice (4), et au moins une buse 'injection de matière synthétique (11), et des moyens d'alimentation du moule en pellicules comportant des moyens d'avance, pas à pas (14, 15), d'une bande (13) du matériau des pellicules vers le moule, et des moyens, associés au moule, pour séparer de ladite bande, après avance de celle-ci d'un pas correspondant à une dimension de la pellicule, une pellicule, se trouvant entre le poinçon et la matrice au moment où le moule est fermé, caractérisée par des moyens de découpe (31, 32) de la pellicule (29) au format choisi, qui ne séparent pas la pellicule de la bande, disposés immédiatement avant le moule (23).

3. Machine selon la revendication 2, caractérisée en ce que lesdits moyens de découpe comprennent deux couteaux (31, 32) s'étendant dans la direction longitudinale de la bande (28), et dont la section transversale est adaptée au format choisi de la pellicule (29).

4. Machine selon la revendication 2 ou la revendication 1, caractérisée en ce que les moyens de séparation de la pellicule comprennent au moins un couteau (30) agencé transversalement à la direction d'avance de la bande (28), en aval desdits moyens de découpe (31, 32).

5. Machine selon l'une quelconque des revendications 2 à 4, caractérisée en ce que la buse d'injection (33) de matière synthétique est portée par le poinçon (24) et en ce que l'on prévoit des moyens de maintien de la pellicule contre le poinçon pendant la fermeture du moule, comprenant au moins un coulisseau (34) logé dans la cavité (35) formée par la matrice (27), saillant, en position ouverte du moule (23), et susceptible de coopérer avec le poinçon (24) pour maintenir la pellicule (29) contre ce dernier pendant la fermeture du moule (23), le coulisseau (34) étant déplaçable, sous l'action du poinçon (24) dans la direction d'avance de celui-ci, à l'encontre d'une forme de rappel.

6. Machine selon la revendication 5, caractérisée en ce que le coulisseau (34) comprend une tige (36) dont une extrémité est reliée à un moyen générateur de la force de rappel, tel qu'un piston (37) pouvant coulisser dans un cylindre (38) prévu au-delà de la cavité (35) de la matrice (27), dans la direction d'avance du poinçon (24), et dont l'autre extrémité porte une tête aplatie (39) susceptible de venir en appui contre la face de la pellicule (29) en regard de la matrice (27).

7. Machine selon la revendication 5 ou la revendication 6, caractérisée en ce que l'axe du coulisseau est au moins sensiblement parallèle à la direction d'avance du poinçon, et notamment confondu avec l'axe central de la matrice.

## Claims

1. Process for manufacturing, by injection of synthetic material, objects comprising a film (29) forming an integral part thereof and constituting an at least partial coating of said objects, by means of an injection machine incorporating a mould comprising a punch (3) and a die (4), and at least one nozzle (11) for injecting synthetic material, said process comprising the following steps of :
- advancing step by step a web (13) of the film material towards the mould (3, 4),
- separating from said web (13), after advance thereof by a step corresponding to one dimension of the film, a film (29) lying between said punch (3) and said die (4) at the instant when the mould is closed,
- injecting synthetic material into the space, between the punch (3) and the die (4), existing when the mould is closed, characterized in that the film (29) is cut out in the desired format from that part of the web (28) immediately preceding the mould (23), without separating the film from the web.

2. Machine for manufacturing, by injection of synthetic material, objects comprising a film (29) forming an integral part thereof and constituting an at least partial coating of said objects, of the type incorporating a mould comprising a punch (3) and a die (4), and at least one nozzle (11) for injecting synthetic material, and means for supplying the mould with films, comprising means (14, 15) for advancing a web (13) of the film material step by step towards the mould, and means associated with the mould for separating from said web, after advance thereof by a step corresponding to one dimension of the film, a film lying between the punch and the die at the instant when the mould is closed, characterized by means (31, 32) for cutting out the film (29) to the desired format, which do not separate the film from the web and which are disposed immediately before the mould (23).

3. Machine according to claim 2, characterized in that said cut-out means comprise two cutters (31, 32) extending in the longitudinal direction of the web (28), and of which the cross-section is adapted to the desired format of the film (29).

4. Machine according to claim 2 or claim 3, characterized in that the means for separating the film comprise at least one cutter (30) arranged transversaly to the direction of advance of said web (28), downstream of said cut-out means (31, 32).

5. Machine according to any one of claims 2 to 4, characterized in that the nozzle (33) for injecting synthetic material is borne by the punch (24) and in that means are provided for maintaining the film against the punch during closure of the mould, comprising at least one sliding block (34) housed in the cavity (35) formed by the die (27), projecting, in open position of the mould (23), and adapted to cooperate with the punch (24) in order to maintain the film (29) against the latter during closure of the mould (23), the sliding block (34) being mobile, under the action of the punch (24), in the direction of advance thereof, against a return force.

6. Machine according to claim 5, characterized in that the sliding block (34) comprises a rod (36) of which one end is connected to a means generating the return force, such as a piston (37) adapted to slide in a cylinder (38) provided beyond the cavity (35) of the die (27), in the direction of advance of the punch (24), and of which the other end bears a flattened head (39) capable of abutting against the face of the film (29) opposite the die (27).

7. Machine according to claim 5 or claim 6, characterized in that the axis of the sliding block is at least substantially parallel to the direction of advance of the punch and in particular merged with the central axis of the die.

## Patentansprüche

1. Verfahren zum Herstellen von Gegenständen durch Spritzgießen eines Kunststoffes, bei dem die Gegenstände eine dünne Folie oder einen Film (29) aufweisen, die bzw. der mit diesen ganzheitlich verbunden ist und die Gegenstände mit einer zumindest teilweisen Abdeckung versieht, mittels einer Spritzgußmaschine bestehend aus einer Form, die einen Durchschlag (3) und eine Matrize (4) aufweist, und zumindest einer Kunststoffspritzdüse (11), wobei das Verfahren folgende Schritte umfaßt:
schrittweises Vorschieben eines Bandes (13) des Materials der Folien zur Form (3, 4),
Abtrennen des Bandes (13) nach dessen Vorschub um einen einer Abmessung der Folie entsprechenden Schrittes, wobei sich die Folie (29) zum Zeitpunkt, in dem die Form geschlossen ist, zwischen dem Durchschlag (3) und der Matrize (4) befindet,
Einspritzen des Kunststoffs in den Raum zwischen dem Durchschlag (3) und der Matrize (4), der besteht, wenn die Form geschlossen ist, dadurch gekennzeichnet, daß die Folie (29) zugeschnitten wird auf das gewählte Format in dem Abschnitt des unmittelbar vor der Form (23) liegenden Bandes (28), ohne die Folie vom Band abzutrennen.

2. Maschine zum Herstellen von Gegenständen durch Spritzgießen eines Kunststoffes, bei der die Gegenstände eine dünne Folie oder einen Film (29) aufweisen, die bzw. der mit diesen ganzheitlich verbunden ist und die Gegenstände mit einer zumindest teilweisen Abdeckung versieht, und die derart ausgebildet ist, daß sie eine Form aufweist, die einen Durchschlag (3) und eine Matrize (4) sowie zumindest eine Kunststoffspritzdüse (11) besitzt, und eine Beschickungseinrichtung der Folienform bestehend aus Mitteln des schrittweisen Vorschubs (14, 15) eines Bandes (13) des Folienmaterials zur Form sowie der Form zugeordnete Mittel aufweist zum Abtrennen des Bandes nach dessen Vorschub um einen einer Abmessung der Folie entsprechenden Schritt, wobei sich die Folie zum Zeitpunkt, in dem die Form geschlossen ist, zwischen dem Durchschlag und der Matrize befindet, gekennzeichnet durch Zuschnittmittel (31, 32) der Folie (29) auf das gewählte Format, die unmittelbar vor der Form (23) angeordnet sind und die Folie nicht vom Band abtrennen.

3. Maschine nach Anspruch 2, dadurch gekennzeichnet, daß die Zuschnittmittel zwei sich in Längsrichtung des Bandes (28) erstreckenden Schneiden (31, 32) aufweisen, deren Quer- oder Profilschnitt abgestimmt ist auf das gewählte Format der Folie (29).

4. Maschine nach Anspruch 1, dadurch gekennzeichnet, daß die Abtrennmittel der Folie zumindest eine Schneide (30) aufweisen, die transversal zur Vorschubrichtung des Bandes (28) hinter den Zuschnittmitteln (31, 32) angeordnet ist.

5. Maschine nach einem der vorhergehenden Ansprüche 2 bis 4, dadurch gekennzeichnet, daß die Kunststoffspritzdüse (33) vom Durchschlag (24) getragen wird und daß Mittel zum Halten der Folie gegen den Durchschlag während der Schließung der Form vorgesehen sind, die zumindest einen Pressenstößel (34) aufweisen, der in dem von der Matrize (27) gebildeten Hohlraum (35) angeordnet ist, bei geöffneter Stellung der Form hervorsteht und so beschaffen ist, daß er mit dem Durchschlag (24) zusammenarbeitet, um die Folie (29) gegen diesen während der Schließung der Form (23) zu halten, wobei der Pressenstößel (34) unter der Wirkung des Durchschlags (24) in dessen Vorschubrichtung entgegen einer Rückstellkraft verschiebbar ist.

6. Maschine nach Anspruch 5, dadurch gekennzeichnet, daß der Pressenstößel (34) einen Stiel oder Schaft (36) aufweist, dessen eines Ende an einem Erzeuger der Rückstellkraft wie ein Kolben (37) liegt, der über den Hohlraum (35) der Matrize (27) hinaus in Richtung des Vorschubs des Durchschlags (24) in einem Zylinder (38) gleitend verschiebbar ist, und dessen anderes Ende einen abgeflachten Kopf (39) trägt, der sich der Matrize (27) gegenüberliegend gegen die Fläche der Folie (29) anlegen kann.

7. Maschine nach einem der vorhergehenden Ansprüche 5 oder 6, dadurch gekennzeichnet, daß die Achse des Pressenstößels zumindest allgemein parallel zur Vorschubrichtung des Durchschlags verläuft und insbesondere mit der Mittelachse der Matrize zusammenfällt.

Fig.1

Fig.2a

1

7

13

14

16

11

8

3

15

Fig.2b

7

13

16

20

F

3

Fig.2c

7

16

20

F

11

8

3

13

Fig.2d

7

16

3

11

8

Fig.3

13

20

21

Fig.2e

7

11

8

12

21

*Fig.4*

Fig. 5